Europäisches Patentamt

European Patent Office

Office européen des brevets

(19)

(11) Publication number: **0 379 743**

**A1**

## (12) EUROPEAN PATENT APPLICATION

(21) Application number: 89200189.2

(51) Int. Cl.⁵: **B09B 5/00, A01G 11/00**

(22) Date of filing: 27.01.89

(43) Date of publication of application:
01.08.90 Bulletin 90/31

(84) Designated Contracting States:
**BE CH DE FR GB IT LI NL**

(71) Applicant: Heidemij Uitvoering B.V.
Veemarktkade 8
NL-5222 AE 's-Hertogenbosch(NL)

(72) Inventor: Mulder, Eric Cornelis
Merwededijk 29
NL-4285 WC Woudrichem(NL)

(74) Representative: Hoijtink, Reinoud et al
OCTROOIBUREAU ARNOLD & SIEDSMA
Sweelinckplein 1
NL-2517 GK Den Haag(NL)

(54) **Method for cleaning soil by conducting through a heated medium.**

(57) A method for purification of polluted soil in which a heated medium is injected into the soil by means of an injection lance (1), the medium is conveyed through the soil and is removed by means of a vacuum, which vacuum is established by means of a lance (10) inserted into the soil, such that random distributed areas of pulluted soil (23) can be purified selectively, even when these do not extend until the surface of the soil.

FIG.4

## METHOD FOR CLEANING SOIL BY CONDUCTING A HEATED MEDIUM

The present invention relates to a method for purification of polluted soil, in which a heated medium is injected into the soil through a injection lance located in the soil, the medium is conveyed through the soil and is removed by means of a vacuum.

Such a method is known from EP-A-0 070 593.

In this known method an injection lance is entered into the soil, and above the injection lance a clock is provided in which a vacuum is maintained, while heated medium is injected through the injection lance. Thus the heated medium will propagate from the outlet apertures of the injection lance through the soil in a direction with a substantial vertical component towards the vacuum clock, during which propogation pollution present in the soil is being gasseously solved and carried away.

In this known method a cone-shaped part of the volume of soil to be purified is being purified, in which the apex of the cone coincides with the output opening of the injection lance, and in which the basis of the cone coincides with the basic area, onto which the vacuüm clock has been located. In some cases a pollution is limited to a certain depth and the polluted volume of soil does not extend from this depth upwards to the surface of the soil. In this known method a substantial, not-polluted part of the soil is being treated as a consequence of the cone-shape of the treated volume which is of not desirable.

The aim of the present invention is to provide a method, in which random dispersed poluted pieces of soil can be purified selectively, even when these do not extend towards the surface of the soil.

This aim is reached by having the vacuüm drawn off by means of a lance located in the soil.

Subsequently, the present invention will be elucidated with the help of some embodiments, which will be described with the help of the accompanying drawings. In the drawings are depicted:

Figure 1: a schematic view of an injection lance, in use with the method according to the present invention;

Figure 2: a schematic view of a vacuum lance being used with the execution of the method according to the present invention;

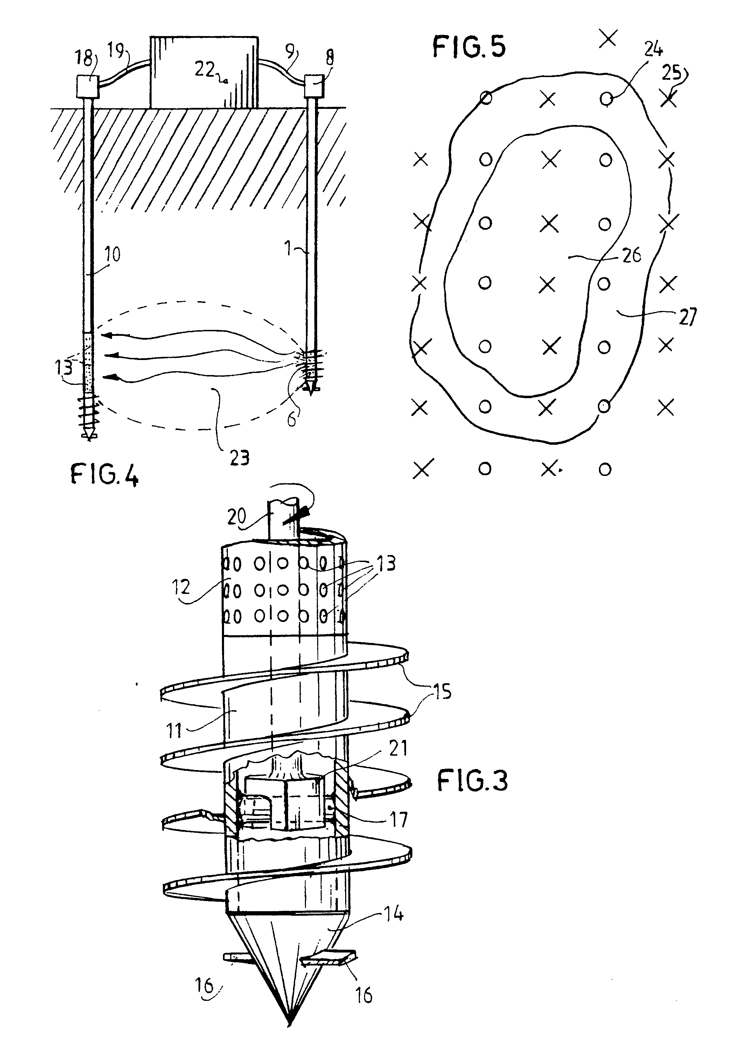

Figure 3: a schematic view, partly broken away of a part of the drawing lance depicted in figure 2;

Figure 4: a diagram for elucidating the method according to the present invention; and

Figure 5: a diagram for clearifying the method acording to the present invention when this is used with a polution extending over a greater area.

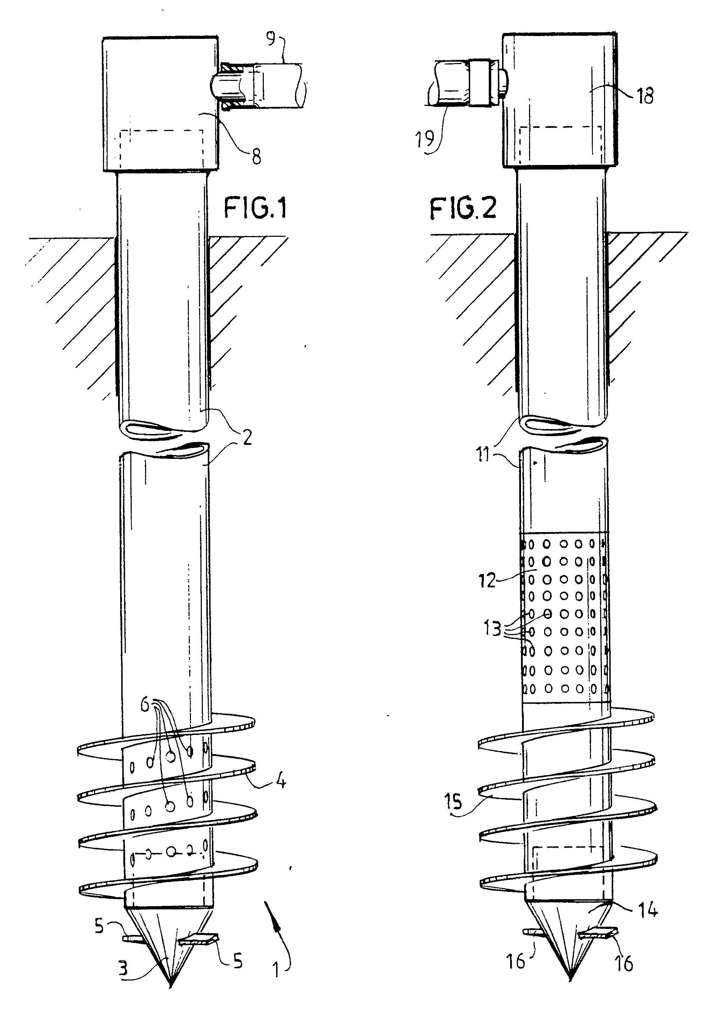

In the execution of the method according to the present invention, initially use is made of an injection lance as depicted in figure 1. This injection lance 1 comprises a tube 2, which is locked off at its lower side by a substantially cone-shaped body 3. This cone-shaped body is fixed to the tube 2 by means of welding, brazing or by means of thread. The cone-shaped body 3 comprises two wing-shaped elements 5, of which the aim is to losen the soil before this is pushed away by a screw blade 4 fixed to the lower part of the tube.

Between the threads of the screw blade 4 output apertures 6 have been provided. It is also possible to provide output apertures 6 in a greater part of the tube 2. The tube 2 comprises an inner coupling cam 7 in its lower part. A coupling sleeve 8 is connected with a hose 9, whereas the coupling sleeve 8 is sealingly, but removably connected with the upper part of the tube 2.

In the method according to the present invention use is made of a vacuum lance 10, which is depicted in figure 2. The vacuum lance 10 comprises a tube 11. At its lower side the tube 11 comprises a screw blade 15. Direct above the screw blade, the tube 7 has been provided of inlet apertures 13 over length 12. Over this length 12 the tube can be made of a different material. The tube 11 is closed at its bottom by a cone-shaped body 14, which is provided of losening elements 16 at its outer side. Also a coupling cam 17 has been provided in the lower part of the tube. On top of the tube 11 a coupling sleeve 18 connected with a hose 19 has been sealingly, but removably fixed.

When executing the method according to the present invention, at least one injection lance and at least one vacuum lance are located in the soil. For the moving the lances into the soil a rod 20 is used, of which the length is equal to or greater than the length of the respective lance. At its lower side a rod 20 comprises a split part 21, which engages over the coupling cam 7, 17 respectively, so that with the help of the rod 20 the cone-shaped body 3, 14 respectively can be driven in rotation, and by rotation of the rod 20 the respective lance can be moved until into the soil to be purified.

As a consequence of this feature, the wall of the tube 11, 2 respectively has not to be so thick that this can transmit the necessary moment for the screwing into the ground of the lance, so that the tube can have relatively thin walls, even when these are made of relatively weak material like plastics or copper. This can be of importance as this material has to be resistant against the pollutions, which have to be removed. Such a material only has to have a limited strength.

Another advantage of this feature is, that tubes composed of several pieces mutually connectable can be applied, which limits the weight of the pieces of tube to be handled considerably, certainly in greater depths.

Further the remark is made, that according to the prior art, it is common use to drive the injection lance into the soil by means of steam or by means of vibrations. Both methods of applying have the disadvantage that the soil in the adjacent area of the lance is densified, so that, in the application of the known method in certain cohesive types of soil like clay, the danger exists that steam injected by the injection lance seeks the path with the lowest resistance and flows upwardly alongside the outer wall of the lance towards the vacuüm area, so that the required effect is not obtained.

In the method according to the present invention use is made of a steam- and vacuum-generating apparatus 22, which apparatus is completely known from and described in the European patent specification 0 070 593, referred to above. The injection lance 1 is connected with the steam- and vacuum-generating apparatus 22 through a hose 9 and a coupling sleeve 8. The vacuum lance 10 is also connected with the steam- and vacuum-generating apparatus 22 through means of a coupling sleeve 18 and the hose 19.

The steam- and vacuum-generating apparatus 22 comprises a steam generator, which supplies steam to the injection lance 1 through the hose 9 and the coupling sleeve 8. This steam emerges from the outlet aperture 6 in the lower area of the injection lance 1 and propagates through the soil towards the vacuum lance 10 as a consequence of the vacuum applied by the vacuum lance 10, so that pollutions present in the ground are solved and carried away or are avaporated and carried away. The steam thus entered into the vacuum lance 10 is then fed towards a receiver present in the steam- and vacuum-generating apparatus 22, in which the pollutions are separated and the steam is condensed. Of course, this receiver is coupled with a vacuum generator. For an accurate descrip tion of the apparatus present within the vacuum generator reference is made to the European patent specification mentioned before.

Consequently, a volume part of soil 23 present between the outlet apertures 6 of the injection lance 1 and the input apertures 13 of the vacuum lance 10 is purified. By controlling the heigth of both lances a volume part of soil being present on any depth can be purified. When pollution extends over a greater depth the whole pollution can be removed in one working cycle by having the lances lowering slowly into the soil.

It is, of course, possible to treat several partial areas of the soil subsequently in case of a pollution extending over a greater area. For instance this can take place according to a pattern as depicted in figure 5. Herein it is possible to treat each of the pairs of injection points 24 and vacuum points 25 sequentially, but it is also possible when a steam- and vacuum-generating apparatus with sufficient capacity is available to treat these simultaneously. Generally the treatment has to spread over an area, which is greater than the visible area 26 of the pollution, as the pollution often extends over a greater area 27 in greater depth.

With the method according to the present invention it is possible to have the conveyance take place in a sloping direction when the location of the pollution gives rise thereto.

In the above there is question of a "heated medium". Generally, one will in connection with the costs and the elimination of secundairy pollutions steam, in particular super-heated steam. It is, of course, also possible to use certain chemicals.

## Claims

1. Method for purification of polluted soil, in which a heated medium is injected into the soil through a injection lance located in the soil, the medium is conveyed through the soil and is removed by means of a vacuüm, **charac terized in** that the vacuüm is drawn off by means of a lance located in the soil.

2. Method according to claim 1, **characterized in** that the conveyance is substantially horizontal.

3. Method according to claim 1 or 2, **characterized in** that means have been provided for blocking the conveyance of the medium alongside the lance.

4. Method according to claim 1, 2 or 3, **characterized in** that the lances are both conveyed in the direction extending along the respective axises.

5. Apparatus for conducting the method according to one of the preceding claims, in which the apparatus comprises: means for generating a heated medium; an injection lance, connected with said means, and being adapted to be stuck into the soil; means for reception of polluted medium, and means for generating a vacuum, **characterized by** a vacuum lance connected both with the means for reception of a polluted medium and with means for generating a vacuum and being fit to be stuck into the soil.

6. Vacuüm lance to be used with the method according to one of the claims 1-5, **characterized in** that the lance comprises a pipe, which has been provided with a screw blade in its lower area, above which the pipe comprises a number of inlet apertures, and in that the pipe is closed off at its bottom by a cone-shaped body.

7. Injection lance to be used with the method according to one of the claims 1-5, **characterized in** that the injection lance comprises means to avoid medium leaking away upwardly at the outside of the lance.

**8.** Injection lance according to claim 7, **characterized in** that the lance comprises a pipe, in the lower area whereof a screw blade has been provided, in between which injection apertures have been provided and which has been closed off at its bottom by a cone-shaped body.

**9.** Lance according to one of the claims 6-8, **characterized in** that the lance comprises an inner coupling cam in its lower area, which is fit to be coupled with a rod, driven in rotation.

**10.** Lance according to one of the claims 6-9, **characterized in** that the lance comprises mutually connectable pieces.

FIG.1  FIG.2

FIG.5

FIG.4

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 098 644 (SHELL)<br>* Page 1, lines 72-97; page 2, lines 53-81; page 3, lines 103-123; figure *<br>--- | 1-5 | B 09 B 5/00<br>A 01 G 11/00 |
| Y | US-A-4 730 672 (F.C. PAYNE)<br>* Column 2, line 15 - column 4, line 55; figures 1-4 *<br>--- | 1-5 | |
| Y | US-A-4 435 292 (J.L. KIRK et al.)<br>* Column 3, line 55 - column 4, line 37; column 5, lines 32-36; column 6, lines 4-15,21-42; column 8, lines 3,4; figures 1-3 *<br>--- | 1,5 | |
| Y,D | EP-A-0 070 593 (D.J. BLONK)<br>* Page 6, line 36 - page 7, line 34; figure 1 *<br>--- | 1,5 | |
| E | NL-A-8 701 963 (HEIDEMIJ UITVOERING)<br>* Whole document *<br>--- | 1-10 | TECHNICAL FIELDS SEARCHED (Int. Cl.5) |
| A | US-A-2 232 898 (C.S. ACKLEY)<br>* Page 2, left-hand column, lines 28-57; page 2, right-hand column, lines 26-44; figures 1,2 *<br>--- | 1,2,5 | B 09 B<br>E 21 B<br>E 02 D |
| A | EP-A-0 155 768 (FOSTER WHEELER)<br>* Page 4, line 22 - page 7, line 7; page 20, line 18 - page 21, line 10; figures 1,2,11 *<br>---           -/- | 1,5,6 | A 01 G |

The present search report has been drawn up for all claims

| Place of search | Date of completion of the search | Examiner |
|---|---|---|
| THE HAGUE | 29-08-1989 | LAVAL J.C.A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

**European Patent Office**

# EUROPEAN SEARCH REPORT

EP 89 20 0189

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | KORRESPONDENZ ABWASSER, vol. 32, no. 10, 1985, pages 863-866, St. Augustain, DE; F. BRUCKNER et al.: "Sanierung von mit leichtflüchtigen chlorierten Kohlenwasserstoffen (CKW) kontaminierten Böden mittels Absaugung der Bodenluft" * Page 864, left-hand column, point 3 * | 1,5 | |
| A | FR-A-1 390 902 (SOLETANCHE) * Page 2, left-hand column, line 8 - right-hand column, line 6; figures 1,2 * | 3,7 | |
| A | DE-A-1 525 881 (A. STIHL) * Page 5, line 14 - page 7, last line; figures 1-3 * | 6,8-10 | |
| A | US-A-4 363 366 (R.D. HILTY) * Column 2, line 29 - column 3, line 45; figures 1-4 * | 6,10 | |
| A | US-A-3 243 962 (G.R. RATLIFF) * Column 2, lines 38-59; column 3, lines 71-74; figures 1,2 * | 6,10 | |
| A | FR-A-1 306 492 (E.L.S.E.) * Page 2, left-hand column, lines 14-22; figure 1 * | 7 | |

TECHNICAL FIELDS SEARCHED (Int. Cl.5)

The present search report has been drawn up for all claims

| Place of search | Date of completion of the search | Examiner |
|---|---|---|
| THE HAGUE | 29-08-1989 | LAVAL J.C.A |

EPO FORM 1503 03.82 (P0401)